# FASCICULE DE BREVET EUROPEEN

(11) **EP 1 184 003 B1**
(45) Date de publication et mention de la délivrance du brevet: **02.07.2003**
(21) Numéro de dépôt: 00119102.2
(22) Date de dépôt: 04.09.2000
(51) Int. Cl.: A61C 5/02

(54) **Instruments pour le traitement de canaux radiculaires dentaires**
Instrument zur Behandlung der Zahnwurzelkanäle
A dental root canal-treating instrument

(43) Date de publication de la demande: 06.03.2002
(73) Titulaire: Maillefer Instruments Holding SA, 1338 Ballaigues (CH)
(72) Inventeur: Maillefer, Pierre-Luc, 1338-Ballaigues (CH); Aeby, Francois, 1442- Montagny-près-Yverdon (CH)
(74) Mandataire: Micheli & Cie

(56) Documents cités:
- CH-A- 689 996
- US-A- 4 611 508

## Description

La présente invention a pour objet un instrument pour le traitement de canaux radiculaires dentaires comprenant une tige effilée présentant sur au moins une partie de sa longueur, constituant sa partie active, au moins une arête hélicoïdale de coupe ou de traitement.

Le traitement d'une racine dentaire infectée se réalise par l'extraction de la pulpe à l'aide d'instruments spécifiques (par exemple : tire-nerfs, Hedstroem, instruments NiTi rotatifs), puis par la mise en forme du canal, au moyen d'alésages successifs à l'aide d'instruments de taille et conicité variables. La dernière opération consiste à obturer le canal (par exemple : cône de Gutta Percha, pâte, ciment).

La mise en forme du canal consiste dans un premier temps à réaliser un élargissement du canal dans ses parties coronaire et médiane pour permettre dans un second temps de traiter la partie apicale du canal plus facilement par un nettoyage mécanique des tissus infectés.

La première phase, soit l'élargissement du canal, peut s'effectuer selon différentes méthodes. La méthode dite "Step back" consiste à faire passer dans le canal une succession d'instruments dont le diamètre va en croissant, en réduisant la longueur alésée à chaque augmentation de diamètre. Ce mode de faire est relativement long. De plus, cette méthode conduit à l'alésage d'un canal en escalier ce qui est peu souhaitable. La seconde méthode dite " Crown-Down" consiste à élargir d'abord la partie coronaire du canal radiculaire, puis à pénétrer, au moyen d'une série d'instruments de plus en plus fins, jusqu'à la zone apicale. Ici également, ce travail est long mais a l'avantage de réduire le risque de fracture des instruments. Une troisième méthode est proposée qui utilise un concept d'instruments avec plusieurs conicités de forme évasée, fins et effilés à la pointe et larges et de forte conicité à l'extrémité de la partie coupante tournée vers le manche. Un tel outil permet au praticien une mise en forme rapide du canal radiculaire puisqu'il peut pour ce faire n'utiliser qu'un faible nombre d'instruments tel que cela est décrit dans le brevet CH - 689.996 de la titulaire plutôt qu'un grand nombre d'instruments de forme et de taille différentes.

La seconde phase de cette mise en forme du canal radiculaire consiste à préparer la zone apicale du canal. Une grande conicité est ici souhaitée de façon à bénéficier d'un volume suffisamment important pour obtenir une obturation optimale du canal. La conicité de la préparation décroît en direction de la partie coronaire du canal.

Le but de la présente invention est de réaliser une série d'instruments permettant la mise en forme du canal dentaire à l'aide d'un petit nombre d'instruments pour que cette opération puisse être effectuée plus rapidement, avec moins de stress pour le médecin dentiste et en toute sécurité pour le patient et qui se distinguent par les caractéristiques énoncées à la revendication 1.

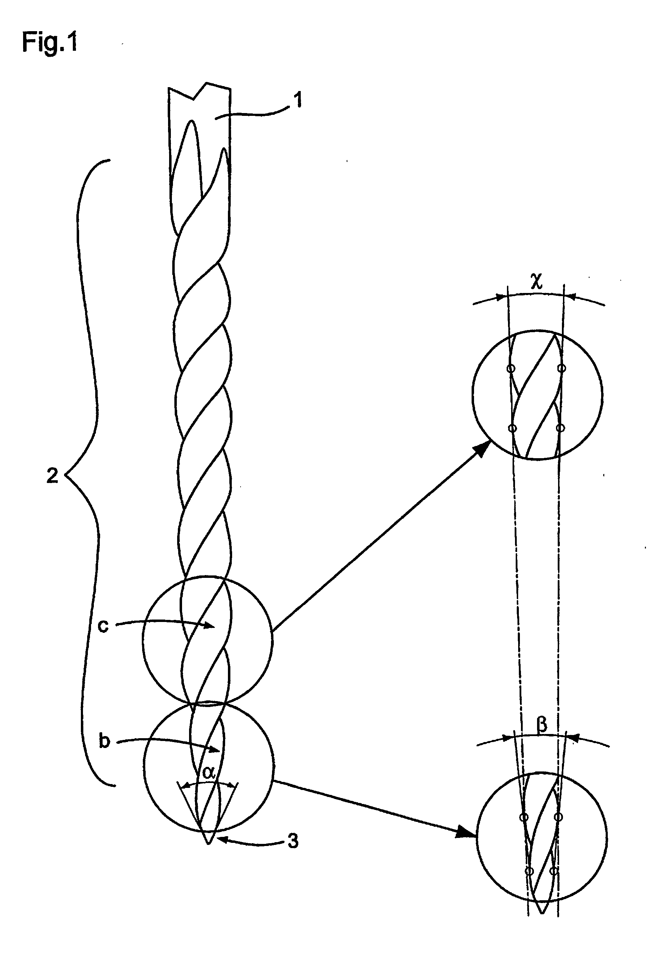

Le dessin annexé illustre schématiquement et à titre d'exemple une forme d'exécution de l'instrument selon l'invention.

La figure unique illustre la pointe de travail de l'instrument selon l'invention.

L'instrument objet de la présente invention destiné à permettre au médecin dentiste un confort de travail accru dans la seconde phase de mise en forme du canal, soit l'évasement de la partie apicale se distingue par le fait qu'il comporte une tige conique 1 présentant au moins une arête hélicoïdale de travail, coupante ou non coupante. La partie active 2 de l'instrument d'une longueur généralement supérieure à 14 mm comporte une enveloppe s'inscrivant dans deux ou plusieurs cônes d'ouverture allant en se réduisant de la pointe 3 de l'outil en direction de sa partie postérieure.

Un tel instrument présente donc une partie terminale, sur quelques millimètres de la partie antérieure de travail 2, comportant une forme générale en ogive.

Ainsi avec un jeu d'instruments, deux ou trois instruments de ce type et de diamètre croissant d'un instrument à l'autre, généralement compris entre 0,1 mm et 3 mm à la pointe de l'instrument, le médecin dentiste peut mettre en forme l'apex de pratiquement tous les canaux radiculaires pouvant se présenter.

Souvent, un seul instrument du présent jeu d'instruments suffit pour la mise en forme de la partie apicale d'un canal radiculaire donné.

Ces instruments peuvent être prévus pour une utilisation manuelle avec un manche ou pour une utilisation mécanisée comportant une partie postérieure destinée à être entraînée en rotation par une pièce à main.

Comme on le voit plus particulièrement sur la figure du dessin, l'angle α du cône de l'enveloppe de la pointe extrême 3 de l'instrument est plus grand que l'angle β ou χ représentant la conicité de l'instrument à des emplacements b et c de la partie active de l'instrument située plus en arrière, soit en direction du manche de l'instrument.

Avec un tel instrument, il est possible de réaliser une partie apicale du canal dentaire présentant une conicité importante de 4% à 6% ce qui permet une bonne obturation. En effet, le volume créé étant plus grand, on peut plus facilement obturer tous les orifices et interstices de façon à rendre le canal totalement étanche et éviter ainsi toute infection post-opératoire.

## Revendications

1. instrument pour le traitement de la partie apicale des canaux radiculaires dentaires comprenant une tige conique (1) présentant au moins une arête active travaillante hélicoïdale, une pointe (3), **caractérisé par le fait que** la partie active antérieure (2) de l'instrument est composée d'au moins deux cônes successifs dont l'ouverture (β,χ) va en décroissant de la pointe (3) antérieure de l'instrument en direction de sa partie active postérieure.

2. Instrument selon la revendication 1, **caractérisé par le fait que** la partie active (2) comporte une multitude de cônes d'ouvertures différentes, de valeur décroissante à partir de la pointe de l'instrument et présente ainsi la forme générale d'une ogive dont la pointe forme la pointe de l'instrument.

3. Instrument selon la revendication 1 ou la revendication 2, **caractérisé par le fait que** la partie active (2) présente une longueur supérieure à 14 mm.

## Patentansprüche

1. Instrument für die Behandlung des apikalen Abschnitts von Zahnwurzelkanälen mit einem konischen Schaft (1), der zumindest eine aktive, schraubenförmige arbeitende Kante und eine Spitze (3) aufweist, **dadurch gekennzeichnet, dass** der aktive vordere Teil (2) des Instruments sich aus zumindest zwei aufeinanderfolgenden Kegeln zusammensetzt, deren Öffnungswinkel (β,χ) sich von der vorderen Spitze (3) des Instruments in Richtung auf seinen hinteren aktiven Teil verringern.

2. Instrument gemäss Anspruch 1, **dadurch gekennzeichnet, dass** der aktive Teil (2) eine Mehrzahl von Kegeln mit verschiedenen Öffnungswinkeln umfasst, deren Wert sich von der Spitze des Instruments her verringert, und somit die allgemeine Gestalt eines Spitzbogens aufweist, dessen Spitze die Spitze des Instruments bildet.

3. Instrument gemäss Anspruch 1 oder Anspruch 2, **dadurch gekennzeichnet, dass** der aktive Teil (2) eine Länge von über 14 mm aufweist.

## Claims

1. Instrument for the treatment of the apical portion of radicular dental canals, comprising a conical shaft (1) having at least one active helicoidal working ridge and a point (3), **characterized by** the fact that the active anterior portion (2) of the instrument is comprised of at least two successive cones whose opening (β,χ) decreases from the anterior point (3) of the instrument in the direction of its active posterior portion.

2. Instrument according to claim 1, **characterized by** the fact that the active portion (2) comprises a multiplicity of cones of different openings, of a value decreasing from the point of the instrument and thus has the general shape of an ogive whose point forms the point of the instrument.

3. Instrument according to claim 1 or claim 2, **characterized by** the fact that the active portion (2) has a length greater than 14 mm.
